# EUROPEAN PATENT APPLICATION

(11) **EP 4 670 574 A1**
(43) Date of publication of application: **31.12.2025**
(21) Application number: 24184227.7
(22) Date of filing: 25.06.2024
(51) Int. Cl.: A47C 7/72, A47C 11/00, H02K 53/00

(54) **URBAN FURNITURE FOR PUBLIC AREAS**

(71) Applicant: Aliyarichermahini, Maryam, 00990 Helsinki (FI); Karami, Majid, 00990 Helsinki (FI)
(72) Inventor: Aliyarichermahini, Maryam, 00990 Helsinki (FI); Karami, Majid, 00990 Helsinki (FI)
(74) Representative: Galbaian S.Coop.

(57) **Abstract**

The invention relates to an urban furniture and to a method for controlling it. The urban furniture (100) comprises a storage device, a charging interface (5) connected to the storage device and an electrical power generation system (3) connected to the storage device and configured to generate electrical power to be stored in said storage device. The system (3) comprises a first generator, a second generator and a motor connected to the storage device and to the first generator to make possible said motor to be driven by the electrical power stored in said storage device and by the electrical power generated by said first generator. The second generator is connected to the storage device and is configured to charge said storage device with the electrical power it generates.

## Description

### TECHNICAL FIELD

The present invention relates to urban furniture for public areas, such as benches or seatings, and in particular to urban furniture with the approach of producing sustainable and clean energy.

### PRIOR ART

Nowadays everybody uses portable devices such as smartphones, that require to be charged, and for that that purpose it is common that public spaces offer charging options. It is usual to see charging interfaces in urban furniture, such as benches. In addition, the urban furniture can also be used to display publicity or other required information through screens than must be electrically powered.

Therefore, said urban furniture require to be connected to electrical power sources in order to provide electrical power supply for charging purposes, for information displaying purposes and/or for any other desired purpose requiring electrical power.

Urban furniture comprising renewable electrical power sources or generators are known, such as a photovoltaic system. Said furniture comprise at least one photovoltaic module designed to convert solar radiation into electrical power, and said electrical power is then transmitted to the charging interface or where required. The main disadvantage of such furniture is that the photovoltaic system only generates electrical energy when sufficient solar radiation is available.

In order to provide electrical power even during periods of insufficient solar radiation, independently of a power grid connection, it is also known to integrate an electrical power storage device into the furniture. This makes it possible to temporarily store the electrical power generated by the photovoltaic system and, when required, to make it available.

However, the stored power is limited and sometimes the furniture could not be able to offer the required electrical power. Therefore, there are also known urban furniture comprising an additional electrical power source that is also independent of the power grid.

One of this solution is shown in EP3832856A1, where the urban furniture comprises at least one charging interface, and two different power sources to produce sustainable and clean electrical power: a photovoltaic system and a kinetic system. The kinetic system is designed to be actuated by a used (with hands or with feet), and said kinetic system generates electrical power as a result of the user intervention upon it.

### DISCLOSURE OF THE INVENTION

The object of the invention is to provide an urban furniture for public spaces, and a method for controlling such urban furniture, as defined in the claims.

A first aspect of the invention refers to an urban furniture that comprises at least one storage device configured to store electrical power, and at least one electrical charging interface connected to the storage device for allowing external electrical devices to be charged with at least electric power stored in said storage device.

The urban furniture further comprises an electrical power generation system connected to the storage device and configured to generate electrical power to be stored in said storage device when operating. The electrical power generation system is integrated in the urban furniture, comprises a first generator, a second generator and a motor, and is configured to be operating when the motor is supplied with electrical power. Said electrical power generation system produces electrical power when is operating.

The motor of the electrical power generation system is connected to the storage device to make possible said motor to be driven by at least the electrical power stored in said storage device. The motor, the generator and said second generator share the same shaft, or a shaft of said motor is coupled to a shaft of said first generator and to a shaft of said second generator, so upon driving the motor with electrical power supply, the motor shaft rotates and causes the shafts of both generators to rotate, said generators producing then electrical power. Thus, when the motor is supplied with electrical power the generators produce electrical power. The motor is preferably coupled between the first generator and the second generator.

The second generator is connected to the storage device and is configured to charge said storage device with at least a portion of the electrical power it generates. Therefore, the electrical power generation system is configured to charge the storage device, so that the urban furniture is always able to offer electrical power for the user that requires it.

The motor is connected to the storage device to make possible said motor to be driven by the electrical power stored in said storage device, the motor being capable of being started to be operating when being supplied with electrical power from the storage device. The first generator is additionally electrically connected to the motor and configured to also drive the motor with at least a portion of the electrical power it generates, such that said motor can also be operating even when no electrical power is supplied from the storage device. In fact, the configuration of the electrical power generation system has been designed to allow the motor to be operating without electrical power being supplied from the storage device, in order to avoid said storage device to be totally discharged.

Thus, once the motor has been started to be operating, the electrical power generation system is able to maintain said motor operating by its own motion. This means that the electrical power generation system does not require external electrical power supply to produce electrical power once it has been caused to be operating, and the urban furniture comprising it is also suitable for indoor spaces and produces sustainable and clean energy.

A second aspect of the invention refers to a method for controlling an urban furniture that comprises at least one storage device configured to store electrical power, at least one electrical charging interface connected to the storage device for allowing external electrical devices to be charged with electric power stored in said storage device, and an electrical power generation system connected to the storage device and comprising a first generator, a second generator and a motor that share the same shaft, or a shaft of said motor being coupled to a shaft of said first generator and to a shaft of said second generator.

The method is configured to cause the electrical power generation system to start operating by supplying electrical power to the motor and to cause said electrical power generation system to stop operating by interrupting the electrical power supply to said motor.

The described advantages related to the first aspect of the invention are also obtained with the second aspect of the invention.

These and other advantages and features of the invention will become apparent in view of the figures and the detailed description of the invention.

### DESCRIPTION OF THE DRAWINGS

Figure 1 shows an embodiment of an urban furniture according to the invention.
Figure 2 shows the urban furniture of figure 1, without a part to show an electrical power generation system based on a motor-generator operation and with an electrical power generation system based on a kinetic power source in a second position.
Figure 3 shows another perspective of the urban furniture of figure 2.
Figure 4 shows an electrical power generation system based on a motor-generator operation together with other components of one embodiment of the urban furniture according to the invention, of the urban furniture of figure 1.
Figure 5 schematic shows the electrical power generation system of figure 4, with other components of one embodiment of the urban furniture according to the invention.
Figure 6 shows the electrical power generation system of figure 4, in a simplified manner.
Figure 7 shows an exploded view of the electrical power generation system of figure 6.

### DETAILED DISCLOSURE OF THE INVENTION

The proposed urban furniture 100 is adapted for public areas and can preferably comprise a bench or a seating. The urban furniture 100 can comprise an electrical power generation system configured to generate or produce electrical power when operating, or a plurality of electrical power generation systems configured to generate electrical power when operating for different types of clean sources.

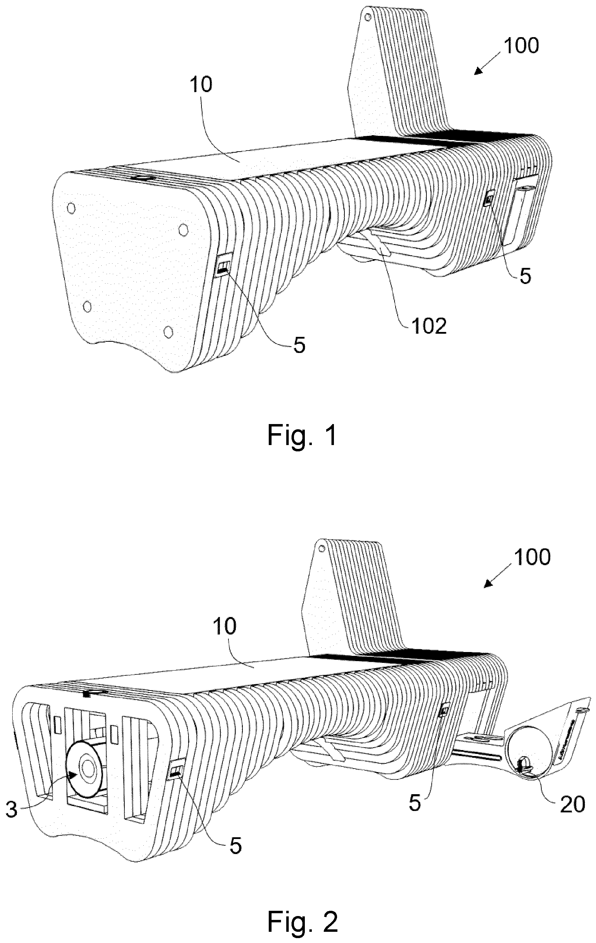

For example, as shown in the embodiment of the urban furniture 100 of figures 1 and 2 (a bench or a seating), the urban furniture 100 comprises an electrical power generation system based on a renewable power source, sun power in this embodiment (the electrical power generation system comprising at least one solar panel 10 and the required elements to convert the sun power into electrical power); an electrical power generation system based on a kinetic power source, comprising means 20 to be actuated by a user (in this embodiment said means 20 comprise a pedal, but other kind of means could also be used, to be actuated by hands, for example, and not by feet); and an electrical power generation system 3 based on a motor-generator operation which is integrated in the urban furniture 100 and that will be described later.

In this embodiment the electrical power generation system based on a kinetic power source can be disposed in a first position where said system is hidden (figure 1) and in a second position where said system is ready to be actuated (figure 2). In figure 2 a part has also been removed to show part of the electrical power generation system 3.

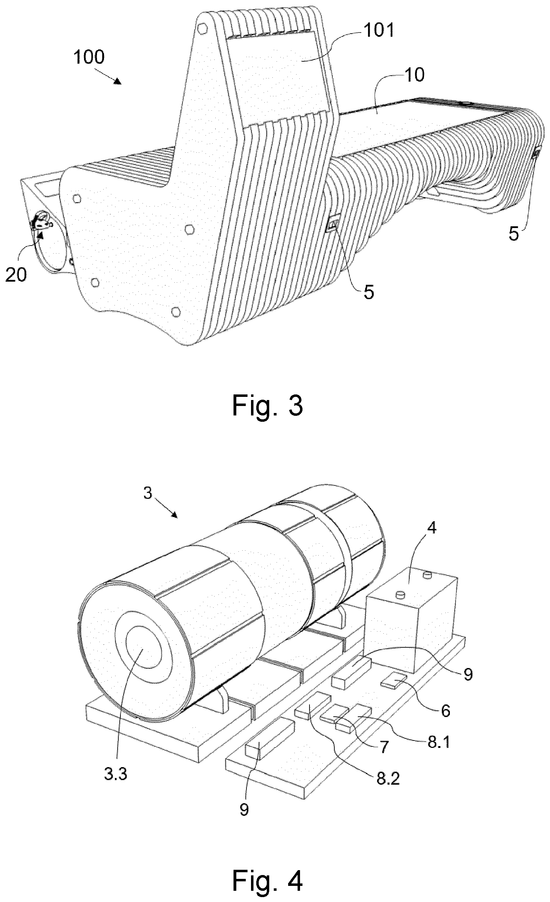

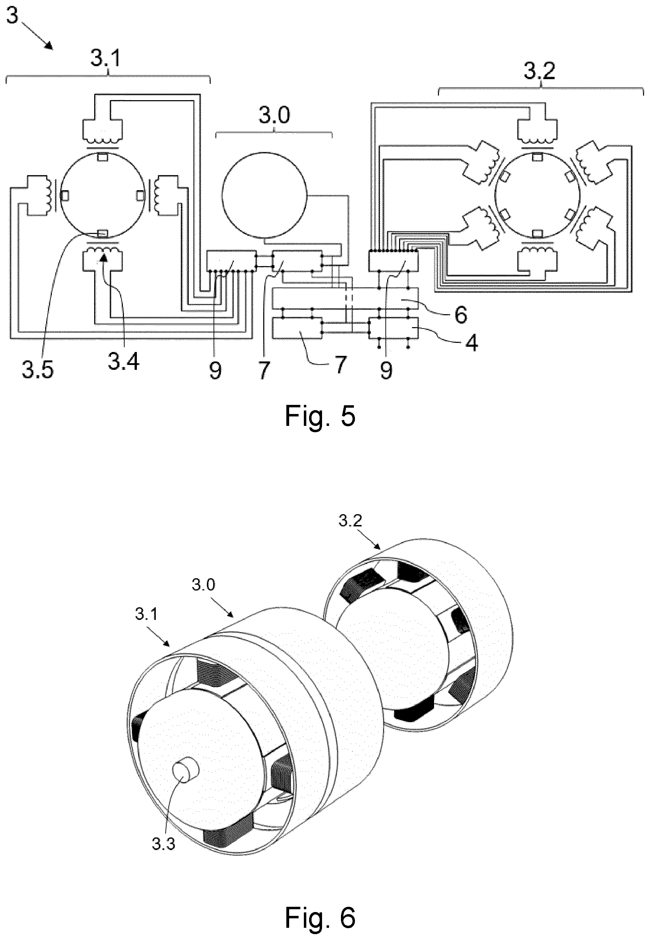

In other embodiments, the urban furniture 100 comprises a single electrical power generation system, in particular an electrical power generation system 3 based on a motor-generator operation as the one shown in figures 4 to 7 by way of example, or any other combination of electrical power generation systems provided that said urban furniture 100 comprises at least one electrical power generation system 3.

In any of the embodiments, the urban furniture 100 comprises at least one storage device 4 configured to store electrical power, such as a battery, and at least one electrical charging interface 5 connected to the storage device 4, for example through a terminal 9, for allowing external electrical devices to be charged with electric power stored in said storage device 4. The electrical power generation systems of the urban furniture 100 are connected to the storage device 4 and configured to generate electrical power when operating, at least part of said generated electrical power being stored in said storage device 4. At least a portion of the produced electrical power is stored in the storage device 4, but the urban furniture 100 can also comprise electrical devices supplied with a portion of said produced electrical power, such as a lighting 102 (figure 1), or a screen 101 for showing any required information or for publicity purposes (figure 3).

An electrical power generation system based on a renewable power source, sun power for example, is well known in the art and any conventional known electrical power generation system can be used in the proposed urban furniture 100 in the embodiments comprising such an electrical power generation system (such as the cone described in EP3832856A1).

In the same way, an electrical power generation system based on a kinetic power is also well known in the art and any conventional known electrical power generation system can be used in the proposed urban furniture 100 in the embodiments comprising such an electrical power generation system (such as any of the configurations described in EP3832856A1).

The electrical power generation system 3 integrated in any embodiment of the urban furniture 100 of the invention comprises a first generator 3.1, a second generator 3.2 and a motor 3.0, as shown in figures 3 and 4, and is configured to be operating when the motor 3.0 is supplied with electrical power. The motor 3.0 is connected to the storage device 4 to make possible said motor 3.0 to be driven by, at least, the electrical power stored in said storage device 4. When the electrical power generation system 3 is operating, said electrical power generation system 3 generates or produces electrical power, and at least a portion of said generated electrical power is supplied to the storage device 4 for charging it. The electrical power generation system 3 requires the motor 3.0 to be operating for generating electrical power.

In some embodiments, the motor 3.0, the first generator 3.1 and the second generator 3.2 of the electrical power generation system 3 share the same common shaft 3.3. In other embodiments not shown in figures, a shaft of said motor 3.0 is coupled to a shaft of said first generator 3.1 and to a shaft of said second generator 3.2, said shafts being aligned and arranged in series. Preferably, the motor 3.0 is coupled between the first generator 3.1 and the second generator 3.2 of said electrical power generation system 3, making the operation and mounting of the electrical power generation system 3 easier, and making said electrical power generation system 3 compact.

The first generator 3.1 is additionally electrically connected to the motor 3.0 and is configured to drive the motor 3.0 with at least a portion of the electrical power it generates. Therefore, the motor 3.0 can be driven at least with electrical power from the storage device 4 and also with electrical power from the first generator 3.1. This allows the storage device 4 to be disconnected from the motor 3.0 when the first generator 3.1 is generating electrical power, said motor 3.0 being then supplied only from said first generator 3.1 and the electrical power generator system 3 being capable of producing electrical power without the storage device 4 being discharged.

The second generator 3.2 is connected to the storage device 4 and is configured to charge said storage device 4 with at least a portion of the electrical power it generates, preferably with all the electrical power it generates. Therefore, the storage device 4 can recover the charge level it comprised previous to supply electrical power to the motor 3.0 and can also be charged above said charge level. The rest of the electrical power produced by the second generator 3.2 can be used to supply the screen 101, the lighting 102 or any other device of the urban furniture 100 requiring electrical power, for example.

The urban furniture 100 also comprises a control unit 6 configured to controllably cause the electrical power generation system 3 to start operating by supplying electrical power to the motor 3.0, and to stop the electrical power generation system 3 by interrupting the electrical power supply of the motor 3.0.

Preferably, the urban furniture 100 further comprises at least one detector 7 configured to detect the charge level of the storage device 4 and communicated with the control unit 6, said control unit 6 being preferably configured to cause the electrical power generation system 3 to start operating or to be stopped depending on said detected charge level.

In particular, in the embodiments where the urban furniture 100 further comprises a detector 7, the control unit 6 is configured to cause the electrical power generation system 3 to start operating when the charge level of the storage device 4 reaches a low threshold value or drops below said low threshold value, by causing the motor 3.0 to be driven by electrical power stored in said storage device 4; and to cause the electrical power generation system 3 to stop producing electrical power when the charge level of the storage device 4 reaches a high threshold value or is higher than said high threshold value, by interrupting the electrical power supply of the motor 3.0.

Consequently, when the storage device 4 is at risk of being uncharged the electrical power generation system 3 is caused to generate electrical power to charge said storage device 4 and to prevent said storage device 4 from said risk. In addition, limiting the electrical power to be charged in the storage device 4 makes the service life of said storage device 4 to be increased.

Once the electrical power generation system 3 starts operating, the control unit 6 is configured to disconnect the motor 3.0 from the storage device 4 after a predetermined time has elapsed from said start. This time is at least enough for the first generator 3.1 to start producing electrical power in a stable manner. When the electrical power generation system 3 starts operating, the first generator 3.1 starts to generate electrical power and said first generator 3.1 is able to supply electrical power to the motor 3.0. Interrupting the electrical power supply from the storage device 4 to the motor 3.0 does not mean then that the electrical power generation system 3 stops operating, instead, said electrical power generation system 3 is still operating thanks to the electrical power generated by the first generator 3.1 and supplied to said motor 3.0. Therefore, the storage device 4 is no longer uncharged for supplying the electrical power generation system 3 but, as said electrical power generation system 3 is still operating, said storage device 4 is charged with at least a portion of the electrical power generated by the second generator 3.2. The electrical power generation system 3 makes the urban furniture 100 to be autonomous and, thanks to the described operation said urban furniture 100 is a smart urban furniture that can control itself the charge level of the storage device 4.

As said, when the charge level of the storage device 4 reaches a high threshold value or is higher than said high threshold value during the operation of the electrical power generation system 3 the electrical power supply of the motor 3.0 is interrupted, and said interruption is carried out by disconnecting the electrical connection between said motor 3.0 and the first generator 3.1. Consequently, the motor 3.0 is no longer supplied with electrical power and is stopped, the electrical power generation system 3 being then stopped.

The urban furniture 100 can comprise a first controllable switch 8.1 electrically connected between the motor 3.0 and the first generator 3.1 and communicated with the control unit 6, and a second controllable switch 8.2 electrically connected between the motor 3.0 and the storage device 4 and communicated with the control unit 6. The control unit 6 is configured to act upon the first controllable switch 8.1 to cause the motor 3.0 to be electrically connected to, or disconnected from, the first generator 3.1, and to act upon the second controllable switch 8.2 to cause the motor 3.0 to be connected to, or disconnected from, the storage device 4.

Each one of the generators 3.1 and 3.2 of the electrical power generation system 3 comprises a plurality of permanent magnets 3.5 and the same number of coils 3.4 to cooperate with said permanent magnets 3.5. The main function of the first generator 3.1 is to supply electrical power to the motor 3.0, in order to cause the motor 3.0 to rotate and consequently to maintain the electrical power generation system 3 operating. Therefore, the power generating requirements for said first generator 3.1 are lower than the power generating requirements for the second generator 3.2, and the number of coils 3.4 and permanent magnets 3.5 of said first generator 3.1 is lower than the number of coils 3.4 and permanent magnets 3.5 of said second generator 3.2. In the embodiment of figures, the number of coils and permanent magnets 3.5 of the first generator 3.1 is four, and the number of coils 3.4 and permanent magnets 3.5 of the first generator 3.2 is six.

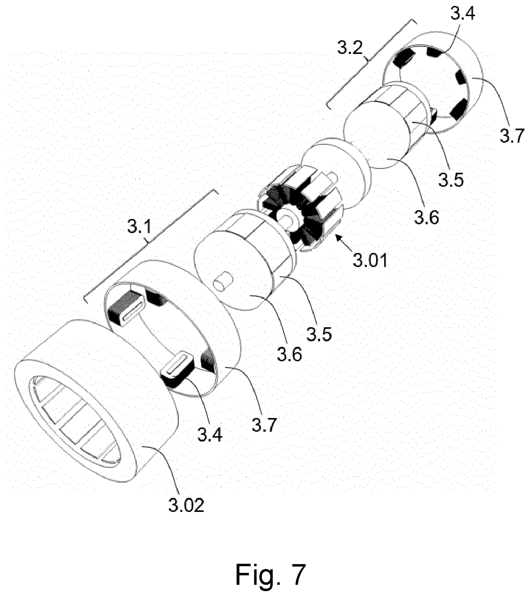

AS shown in figure 7, each one of the generators 3.1 and 3.2 of the electrical power generation system 3 comprises a core 3.6 attached to the corresponding shaft (or to the shared shaft), and when the shaft rotates, the core 3.6 also rotates. The permanent magnets 3.5 are attached to the core 3.6, they also rotating. Each one of the generators 3.1 and 3.2 also comprises a stator 3.7 and the coils 3.4 are attached to the stator 3.7. Therefore, when the motor 3-0 is operating and causes the shaft to rotate, the permanent magnets 3.5 of each one of the generators 3.1 and 3.2 also rotates and generates an electromagnet field together cooperating with the respective coils 3.4, electrical power being thus generated. The electrical power generation system 3 is then a microwave-magnetic system. The motor 3.0 also comprises a rotating part 3.01 (a rotor) and a static part 3.02 (a stator).

A second aspect of the invention relates to a method for controlling an urban furniture 100 as the one of the first aspect of the invention in any of its configurations and/or embodiments. The method will be adapted to the corresponding configuration and/or embodiment of the urban furniture 100 of the first aspect of the invention. Therefore, features mentioned for the urban furniture 100 and not explicitly mentioned for the method are also valid for said method if the corresponding embodiment or configuration so requires.

Likewise, the urban furniture 100 may comprise a configuration adapted to support the method of the invention, in any of its embodiments and/or configurations, said configuration of the urban furniture 100 being adapted to the corresponding embodiment and/or configuration of the method.

The method is configured to cause the electrical power generation system 3 to start operating by supplying electrical power to the motor 3.0 of said electrical power generation system 3, and to cause the electrical power generation system 3 to stop operating by interrupting the electrical power supply to said motor 3.0. While operating, the electrical power generation system 3 is generating electrical power.

In the method, the operation of the electrical power generation system 3 is caused to start or to stop depending on the charge level of the storage device 4 of the urban furniture 100, as described for the first aspect of the invention.

Once the electrical power generation system 3 starts to be operating, power supply to the motor 3.0 from the storage device 4 is interrupted after a predetermined time from said starting point, said motor 3.0 being caused to be electrically powered by only the energy power supplied to the motor 3.0 from the first generator 3.1 from that moment until the electrical power generation system 3 is stopped, as also described for the first aspect of the invention.

## Claims

1. Urban furniture for public areas, the urban furniture (100) comprising at least one storage device (4) configured to store electrical power, at least one electrical charging interface (5) connected to the storage device (4) for allowing external electrical devices to be charged with electric power stored in said storage device (4), and at least one electrical power generation system (3) connected to the storage device (4) and configured to generate electrical power to be stored in said storage device (4) when being operating, **characterized in that** the electrical power generation system (3) comprises a first generator (3.1), a second generator (3.2) and a motor (3.0) and is configured to be operating when the motor (3.0) is supplied with electrical power and to generate electrical power when is operating, the motor (3.0) being connected to the storage device (4) to make possible said motor (3.0) to be driven by the electrical power stored in said storage device (4), and said motor (3.0), said first generator (3.1) and said second generator (3.2) sharing the same common shaft (3.3), or a shaft of said motor (3.0) being coupled to a shaft of said first generator (3.1) and to a shaft of said second generator (3.2), such that when the motor (3.0) is supplied with electrical power causes both generators (3.1, 3.2) to produce electrical power, the first generator (3.1) being additionally electrically connected to the motor (3.0) and configured to drive the motor (3.0) with at least a portion of the electrical power it generates, and the second generator (3.2) being connected to the storage device (4) and being configured to charge said storage device (4) with at least a portion of the electrical power it generates, the urban furniture (100) further comprising a control unit (6) configured to controllably cause the electrical power generation system (3) to start operating by supplying electrical power to the motor (3.0) and to stop by interrupting the electrical power supply of the motor (3.0).

2. Urban furniture according to claim 1, comprising a detector (7) configured to detect the charge level of the storage device (4) and communicated with the control unit (6), said control unit (6) being configured to determine said charge level from said detected charge level and to cause the electrical power generation system (3) to be operating or to be stopped depending on said determined charge level.

3. Urban furniture according to claim 2, wherein the control unit (6) is configured to cause the electrical power generation system (3) to start to be operating when the charge level of the storage device (4) reaches a low threshold value or drops below said low threshold value, by causing the motor (3.0) to be driven by electrical power stored in said storage device (4), and to cause the electrical power generation system (3) to be stopped when the charge level of the storage device (4) reaches a high threshold value or is higher than said high threshold value, by interrupting the electrical power supply of the motor (3.0).

4. Urban furniture according to any of claims 1 to 3, wherein the control unit (6) is configured to interrupt the electrical power supply towards the motor (3.0) by disconnecting the electrical connection between said motor (3.) and the first generator (3.1).

5. Urban furniture according to claim 4, wherein the control unit (6) is configured to disconnect the motor (3.0) from the storage device (4) after a predetermined time from the connection of said motor (3.0) to said storage device (4) that causes the electrical power generation system (3) to start to be operating, said electrical power generation system (3) being thus configured for being operating only by the energy power supplied to the motor (3.0) from the first generator (3.1) from that moment until the control unit (6) interrupts the electrical power supply of the motor (3.0).

6. Urban furniture according to claim 4 or 5, comprising a first controllable switch (8.1) connected between the motor (3.0) and the first generator (3.1) and communicated with the control unit (6), and a second controllable switch (8.2) connected between the motor (3.0) and the storage device (4) and communicated with the control unit (6), the control unit (6) being configured to act upon the first controllable switch (8.1) to cause the motor (3.0) to be electrically connected to, or disconnected from, the first generator (3.1) and to act upon the second controllable switch (8.2) to cause the motor (3.0) to be connected to, or disconnected from, the storage device (4).

7. Urban furniture according to any of claims 1 to 6, wherein each one of the generators (3.1, 3.2) of the electrical power generation system (3) comprises a specific number of permanent magnets (3.5) and the same specific number of coils (3.4) to cooperate with the permanent magnets (3.5) to produce electrical power, the number of permanent magnets (3.5) and coils (3.4) linked to the first generator (3.1) being lower than the number of permanent magnets (3.5) and coils (3.4) linked to the second generator (3.2).

8. Urban furniture according to any of claims 1 to 7, wherein the motor (3.0) of the electrical power generation system (3) is coupled between the first generator (3.1) and the second generator (3.2) of said electrical power generation system (3).

9. Urban furniture according to any of claims 1 to 8, comprising a first additional electrical power generation system based on a renewable power source, preferably sun power, and a second additional electrical power generation system based on a kinetic power source, the additional electrical power generation systems being configured to produce electrical power when being operating and being communicated with the storage device (4) for charging said storage device (4) with at least a portion of the produced electrical power.

10. Urban furniture according to any of claims 1 to 9, comprising a bench or a seating.

11. Method for controlling an urban furniture comprising at least one storage device (4) configured to store electrical power, at least one electrical charging interface (5) connected to the storage device (4) for allowing external electrical devices to be charged with electric power stored in said storage device (4), and an electrical power generation system (3) connected to the storage device (4) and comprising a first generator (3.1), a second generator (3.2) and a motor (3.0) that share the same shaft ,or a shaft of said motor (3.0) being coupled to a shaft of said first generator (3.1) and to a shaft of said second generator (3.2), the method being configured to cause the electrical power generation system (3) to start to be operating by supplying electrical power to the motor (3) of said electrical power generation system (3) and to cause the electrical power generation system (3) to be stopped by interrupting the electrical power supply to said motor (3.0).

12. Method according to claim 11, wherein the electrical power generation system (3) is caused to start to be operating or to be stopped depending on the charge level of the storage device (4) of the urban furniture (100).

13. Method according to claim 11, wherein the electrical power generation system (3) is caused to start to be operating when the charge level of the storage device (4) reaches a low threshold value or drops below said low threshold value, by causing the motor (3.0) to be driven by electrical power stored in said storage device (4), and to cause the electrical power generation system (3) to be stopped when the charge level of the storage device (4) reaches a high threshold value or is higher than said high threshold value and said electrical power generation system (3) is operating, by interrupting the electrical power supply of the motor (3.0).

14. Method according to claim 13, wherein the electrical power supply to the motor (3.0) from the storage device (4) is interrupted after a predetermined time from the start to be operating of the electrical power generation system (3), said motor (3.0) being caused to be electrically powered by only the energy power supplied to the motor (3.0) from the first generator (3.1) from that moment.

15. Method according to claim any of claims 11 to 14, being configured for controlling an urban furniture (100) further comprising a first additional electrical power generation system based on a renewable power source and a second additional electrical power generation system based on a kinetic power source.
